# EUROPEAN PATENT SPECIFICATION

(11) **EP 0 456 638 B1**
(45) Date of publication and mention of the grant of the patent: **05.04.1995**
(21) Application number: 89912202.2
(22) Date of filing: 10.10.1989
(51) Int. Cl.: F16K 11/087

(54) **MIXING VALVE WITH A BALL CONTROL MECHANISM**
MISCHVENTIL MIT KUGELSTEUERUNGSMECHANIK
VANNE MELANGEUSE A MECANISME DE COMMANDE DU TOURNANT

(43) Date of publication of application: 21.11.1991
(73) Proprietor: MASCO CORPORATION OF INDIANA, Taylor Michigan 48180 (US)
(72) Inventor: GRASSBERGER, Roland, B-1060 Bruxelles (BE)
(74) Representative: KIRKER & Cie S.A.
(86) International application number: US8904506
(87) International publication number: WO9105967

(56) References cited:
- EP-A- 0 217 988
- US-A- 4 108 208
- US-A- 4 352 369
- US-A- 4 449 551
- US-A- 4 617 965

## Description

The present invention relates to a mixing faucet having a faucet body, inlet openings for the inlet of hot and cold water, which inlet openings are equipped with tubular seals, a discharge opening for the discharge of mixed water, a partial spherical seat, a spherical valve element equipped with a guiding mechanism which allows movement of the valve element in two different directions, said valve element being provided with an inlet cooperating with said inlet openings and with an outlet cooperating with said discharge opening to control the mixing between hot and cold water and the total flow of mixed water, whereby said inlet openings and said discharge opening are all located in the partial spherical seat.

A mixing valve of this type is known from US-A-4.449.551 and is commonly referred to as a ball valve and is provided with openings which communicate with inlet openings for hot and cold water in the faucet body. The inlets in the faucet body are equipped with tubular seals made of elastomeric material that abut against the ball valve. Furthermore, the openings in the ball valve are in communication with an outlet in the faucet body. The proportion between hot and cold water as well as the flow is regulated by moving the spherical valve member fitted in the cavity in the faucet body. Mixing faucets with a ball valve mechanism are commonly used because they offer many advantages.

However, the above-mentioned type of valve presents several disadvantages which derive from the rather restricted usable diameter of the tubular inlet seals made of elastomeric material through which the hot and cold water enters. Consequently, these faucets have a limited flow rate. Furthermore, they have a limited comfort zone which means that the movement of the handle which actuates the ball from all cold to all hot is limited. Furthermore, they have a rather high noise level. These disadvantages can be eliminated by increasing the diameter of the elastomeric tubular seals, but this is not easy in practice, as with increasing dimensions these seals loose their dimensional stability and become prone to leaks and can get damaged by the moving ball because of the increased friction between the pieces.

It is an aim of the present invention to obtain an improved faucet using the same methods of control that has an increased flow rate, an increased comfort zone, and reduced noise levels without adding other inconveniences. This aim is obtained by a mixing faucet as defined in claim 1.

In accordance with the invention, the advantages are obtained by incorporating at least two openings equipped with the known tubular elastomeric seals for providing the hot water as well as two openings equipped with the known tubular elastomeric seals for providing the cold water. The openings are located more or less along a horizontal great circle, i.e. circumference of the partial or semi-spherical seat in the faucet body. The spherical valve element equipped with an inlet opening in its surface is able to fully open at least two inlet openings in the faucet body at the same time when full flow is desired.

In the open position of the faucet, at least two inlet openings are activated by having them in fluid communication with the interior of the spherical valve member. The two inlet openings can be either two cold inlet openings or one cold and one hot water inlet opening in a mixed position or two hot water inlet openings. In the intermediate position, at least one inlet hole is fully open, whereas another one or two of the adjacent holes is partially aligned with the openings in the spherical valve member. Even with the same dimensional limits imposed by the faucet and by the same diameters of the seals of the inlet holes, the maximum flow rate is substantially increased over the faucets known today which have a total area of only one opening activated at a given time. Through this construction, the flow velocity at the inlet openings is reduced and provides a notable reduction of noise generated. Further, as there are at least four rather than two openings, the openings can be positioned along the circumference of the sphere (more or less) in an angle rather wide which at the limit could be even 360°. Consequently, a much wider angle for which the movable ball valve member can be rotated to provide temperature variation and therefore a wide comfort zone which could reach even 180° is available.

Preferably the opening in the surface of the movable ball valve member is defined by several apertures separated by narrow ribs. Because of this, one can avoid any possibility that the tubular seats of the inlet openings being pressed into the inside of the ball valve member by the water pressure and deteriorating by having the ball valve element cut into the surface of the tubular seal as it is pivoted.

Other advantages appear from the features indicated in the dependent claims and from the description disclosing hereafter the invention in detailed manner by means of accompanying drawings representing schematically and by way of examples several embodiments and variants, wherein:
Fig. 1 is a side elevation and segmented view of one embodiment of a faucet valve in accordance with the invention;
Fig. 2 is a top plan view along the arrow 2 in Fig. 1 showing a faucet body with its semi-spherical seat of the faucet shown with the ball valve and cap elements removed;
Fig. 3 is a perspective view of the ball valve shown in Fig. 1;
Fig. 4 is a perspective view of the guiding element for the ball valve shown in Fig. 1;
Fig. 5 is a side elevation and segmented view of a second embodiment of a faucet valve;
Fig. 6 is a top plan view similar to Fig. 2 of the second embodiment faucet body;
Fig. 7 is a perspective view of the ball valve shown in Fig. 5;
Fig. 8 is a perspective view of a modified ball valve;
Fig. 9 shows a cross-sectional view along the lines 9-9 for its upper section and along the lines 9-9b for its lower section of Fig. 10 of this invention;
Fig. 10 is a top plan view of the faucet body shown in Fig. 9;
Figs. 11-15 show five variations of the openings in the ball valve shown in Fig. 9;
Fig. 16 is a view like Fig. 1 showing a further alternate embodiment; and
Fig. 17 is a view like Fig. 1 showing a further alternate embodiment.

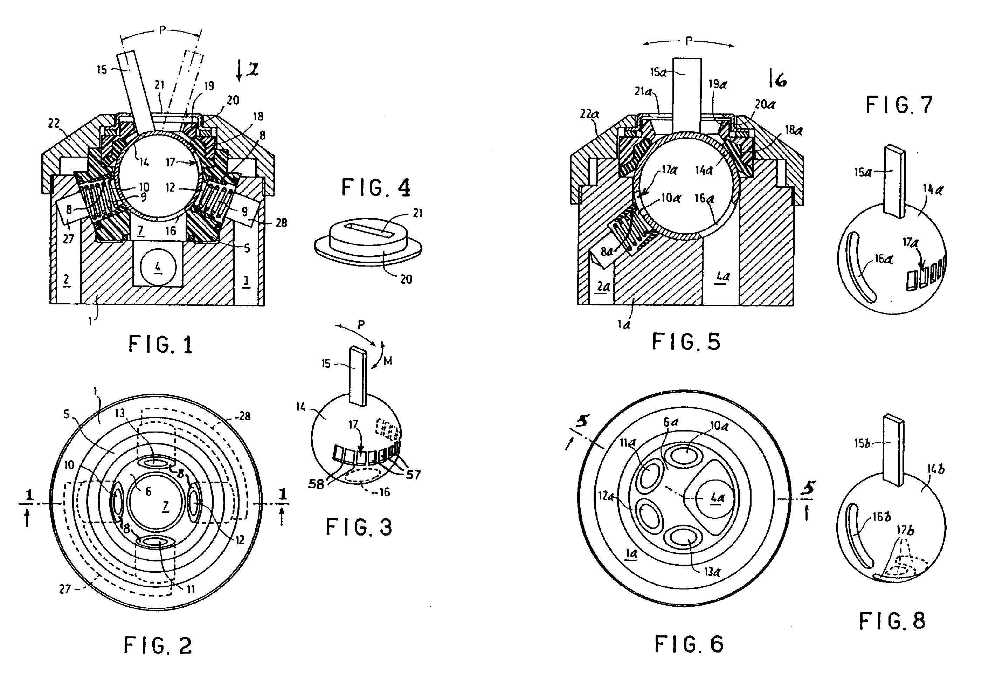

Referring to Fig. 1, a faucet body 1 has inlet passages 2 and 3 for supplying the hot and cold water and and an outlet passage 4 for discharging of the mixture of the mixed water. In an appropriate shaped seat formed in body 1 is located an auxiliary insert 5 which forms a partial spherical seat 6 for a movable ball 14. The insert 5 has openings 7, 10, 11, 12 and 13 therethrough. Opening 7 for the mixed water communicates with the outlet passage 4 in body 1. The openings 10, 11, 12 and 13 communicate with inlet passage 2 and 3 of body 1 for supplying the hot and cold water via channels 27 and 28, respectively. A tubular seal 8 made from elastomeric material is inserted in each of the openings 10, 11, 12 and 13. Each seal 8 is biased toward the inside of the partially spheric seat 6 by a spring 9. Two of these seals 8 and springs 9 can be seen in Fig. 1.

The movable ball valve 14 of these faucets, shown in perspective in Fig. 3, is composed of a body which is equipped with a stem 15 (normally connected to a handle not shown) which can be controlled to move the ball along two axes; i.e. pivoting motion along the arrow P of Figs. 1 and 3 (to control the flow rate of the valve) and rotation about the axes of the stem 15 along the arrow M in Fig. 3 (to control the mixing proportion of the hot and cold water). The ball valve 14 has an outlet 16 for the mixed water which, communicates with opening 7 for the mixed water and an inlet 17 through which the ball valve cooperates with openings 10-13 and seal 8 in each opening 10-13. Ball valve 14 is retained seated in the semi-spherical seat 6 via a holding ring 19 and an intermediate seal 18. All pieces including a stem guide 20 with hole 21 that receives stem 15 are secured by a cap 22 threaded onto body 1 of the faucet.

Another function of insert 5 is to allow easy manufacturing of the inlet openings 10, 11, 12 and 13 at angles that could not otherwise be achieved by using standard machine tools. The holes of insert 5 can be drilled without a problem drilling from the outside of the insert. Further, even if the body of the faucet is made from brass as usual, insert 5 can be made from plastic which can be molded into shape with openings 10-13. As can be seen in Fig. 2, the openings for the inlet which hold tubular seals 8 are circumferentially spaced about the surface of the partially semi-spherical seat 6 near a horizontal great circle, i.e. circumference or equator of the formed ball. Two inlet openings 10 and 11 are in connection with inlet passage 2 for the hot water through a peripheral channel 27, whereas, for instance, the other two inlet openings 12 and 13 are connected to inlet passage 3 for the cold water through peripheral channel 28.

Inlet 17 of the control ball is made of a series of rectangular apertures 57 separated by a support rib 58. When the ball is pivoted by tilting the stem 15 toward the right (Fig. 1), inlet 17 always uncovers two adjacent inlet openings which can be either openings 10 and 11 to allow the inlet for hot water only, as well as two inlets 11 and 12 for mixed water and inlets 12 and 13, if only cold water is wanted. Even if the inlet seals have the usual dimension, the maximum flow rate is much higher because two adjacent openings can be completely uncovered. Preferably inlet 17 is longer than the minimum length required to simultaneously open two adjacent inlet holes, so that it extends toward the third opening. By inlet 17 being so dimensioned, in certain positions, it completely uncovers one hole whereas the two adjacent holes are partially uncovered. Passing gradually from the only cold water position to the only hot water position, one has at first to activate both inlet openings for the cold water; then one starts to close one of the cold water openings whereas the one hot water opening becomes partially uncovered. Further motion completely closes the first cold water opening and completely opens the first hot water opening. Subsequently, the second cold water opening partially progressively closes and the second hot water inlet opening progressively opens until only the two hot water openings are open. In this way, one can obtain a smooth progressive change of the mixed water temperature proportional to movement of the handle. With an appropriate location of the openings, the temperature relation of the mixed water relative to the position of the control handle connected with the ball can be made as linear as possible. It is preferable that inlet 17 along the circumference of the ball is formed by several rather small apertures 57 shown in Fig. 3 to avoid damage of the tubular seals by the corners of opening 57.

If the inlet openings are circumferentially distributed along 360°, one can obtain the largest comfort zone. However, in the majority of cases, it is sufficient and may be preferred to the two hot and cold water openings along an angle smaller than 360° and consequently reducing the control angle of the movable ball. As shown in Figs. 5 and 7, the parts of the valve are numbered similarly to the first embodiment, and the function is not described in detail if it is more or less unchanged. In this embodiment, the tubular seals for the inlet openings are directly inserted in the body because the angle is such that the holes can be machined easily from the inside. As can be seen in Fig. 6, the inlet openings are circumferentially distributed about a 180° angle in semi-spherical seat 6. The outlet opening 4 is located in the part not covered by these inlet holes. As a consequence, the angle of movement of the ball from the all hot position to the all cold position is approximately half of the first embodiment. Because outlet passage 4a has a different position, naturally also the outlet opening 16a in ball valve 14a has a corresponding different position as shown in Fig. 7.

Fig. 8 shows a variation of the ball valve shown in Fig. 7. As far as Fig. 8 is concerned, this ball valve 14b is equipped with a stem 15b and an outlet 16b, whereas inlet 17b is located in the lower part of the ball rather than near the equator. As a consequence, the opening of the faucet is achieved by tilting the stem 5b so that inlets 17b come up from the bottom rather than from the top as is the case of the ball valve shown in Fig. 7. Also, inlet 17b instead of being reinforced by ribs is continuous.

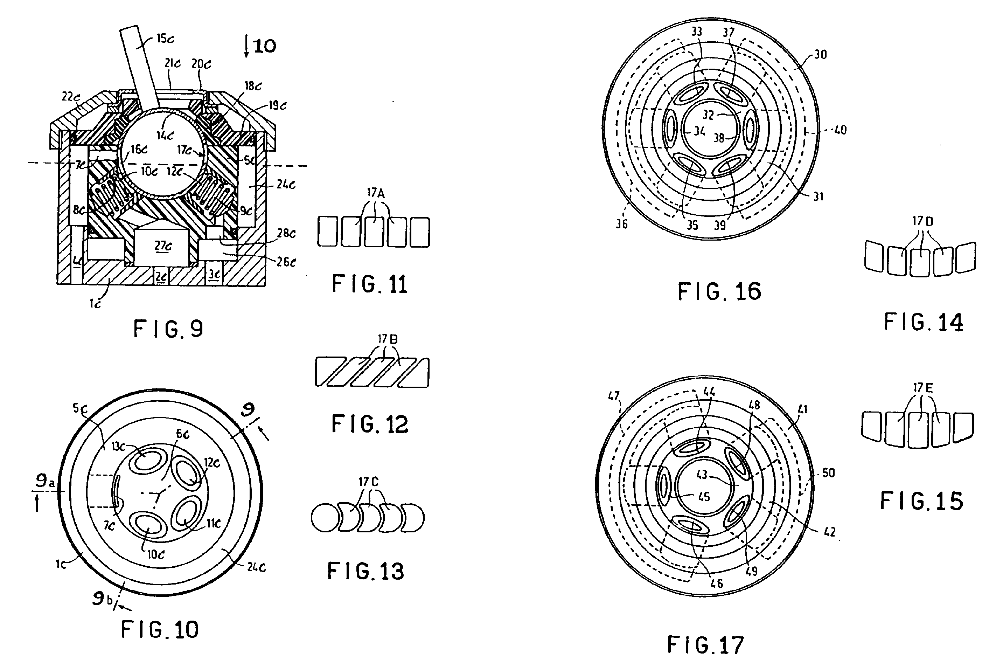

Referring to Figs. 9 and 10, another embodiment is shown. In this case, insert 5c has the character of a cartridge and is inserted in body 1c by spacing appropriate seals in between. The fixing cap 19c can be fixed at the exterior of the body. A channel 24c exists between body 1c and the cartridge, and is in fluid communication with the discharge opening 4c extending downwardly as shown or externally on the side of body 1c. The mixed water enters the channel 24c when leaving the ball 14c through outlet 16c which is located in the upper part of the body through passage 7c of cartridge body 5c. The cartridge has a central passageway 27c for hot water that is connected to inlet passage 2c of body 1c and inlet openings 10c and 11c. The lateral passageway 28c for the cold water connects to inlet openings 12c and 13c for the cold water. Between the bottom of body lc and cartridge 5c, a space 26c is foreseen which communicates with inlet 3c for the cold water in body 1c and with passage 28c of the auxiliary body 5c. One can make the cartridge from the insert body 5c and the pieces inside symmetric so that in two faucets one has the central passage 27c connected to the hot water whereas in the other it is connected with the cold water. This would be very useful in cases where faucets are installed on the two surfaces of a common central wall using the same piping for the hot and cold water (back-to-back installation). The inlet openings 10c-13c are circumferentially located about 180° to 360°. As mentioned above, even if the opening slit 17c in the ball can be uninterrupted as the inlet 17b in Fig. 7, it is preferable that this opening is separated into small windows. This separation can take different forms, e.g. the opening can be separated into rectangles 17A as shown in Fig. 11 or in oblique windows 17B as shown in Fig. 12. It is also possible to have openings with curved shapes as windows 17C in Fig. 13. Further, the line along which these are located might be straight as shown in Figs. 11 and 13, or can be curved as shown by windows 17D in Fig. 14. Further, as can be shown in Fig. 15, the windows 17E can have a different length. By choosing these opening shapes intelligently, the control curve for the temperature can be made as linear as possible, i.e. a change in the angular position of the control element is proportional to the increase or decrease in the mixed water temperature.

In the faucets shown in Figs. 2, 6 and 10, two openings are shown for each hot and cold water inlet. However, this is only the minimum required by the invention which foresees also the possibility to use more than two openings for each hot as well as cold water.

As shown in Fig. 16, the semi-spherical surface 32 of the insert 31 is positioned in the body of faucet 30 and has three openings 33, 34 and 35 for the hot water in fluid communication with the common inlet channel 30. Three openings 37, 38 and 39 are again likewise in fluid communication with channel 40.

Fig. 17 shows an embodiment which is specifically adapted for applications in which the hot water is furnished at a considerably lower pressure than the cold water, as is very common when instantaneous gas water heaters are used.

In this case the semi-spherical seat 43 of insert 42 which is inserted in faucet body 41 has three openings 44, 45 and 46 for the hot water connected by a channel 47. The cold water inlet is only through two openings 48 and 49 which are similarly connected through a channel 50. This construction allows compensation for the lower pressure of the hot water relative to the cold water through a larger section of inlet openings for the hot water. As this invention does not call for modification of the geometry of the rubber seals in the inlet and their springs as well as the guiding parts and seals on top of the ball valve, many components of the faucets according to this invention are common with existing faucets already in production.

Even though the drawings disclose openings circumferentially spaced about the semi-spherical surface of the body of the faucet at the same level, it should be understood that the invention also can apply to inlet openings that are more closely spaced toward the bottom. A certain difference in the level of the center of the inlet openings of the two hot or the two cold openings might be desirable in order that the opening of the two hot and the two cold openings does not occur simultaneously and the angle of the volume control is thus increased. It is desirable if the difference in level is not greater than one-half of the interior diameter of the tubular seals. The outlets 16, 16a, 16b or 16c of the ball valve can be located or shaped relative to the discharge openings 7, 4a, or 7c in a way that according to the temperature control position a part is restricted to function as a preclosure to the exit which can reduce that noise level of the faucet as well as linearizing the flow of the faucet through the total temperature control range.

## Claims

1. A mixing faucet having :
- a faucet body (1;1a;1b;1c);
- inlet openings (10-13;10a-13a;10c-13c;33-35;37-39;44-46;48,49) for the inlet of hot and cold water, which inlet openings (10-13;10a-13a;10c-13c;33-35;37-39;44-46;48,49) are equipped with tubular seals (8;8a;8c);
- a discharge opening (7;4a;7c) for the discharge of mixed water;
- a partial spherical seat (6;6a;6c;32;43);
- a spherical valve element (14;14a;14b;14c) equipped with a guiding mechanism (15;15a;15b;15c) which allows movement of the valve element (14;14a;14b;14c) in two different directions, said valve element (14;14a;14b;14c) being provided with an inlet (17;17a;17b;17c) cooperating with said inlet openings (10-13;10a-13a;10c-13c;33-35;37-39;44-46;48,49) and with an outlet (16;16a;16b;16c) cooperating with said discharge opening (7;4a;7c) to control the mixing between hot and cold water and the total flow of mixed water;
whereby said inlet openings (10-13;10a-13a;10c-13c) and said discharge opening (7;4a;7c) are all located in the partial spherical seat (6;6a;6c;32;43), the faucet being characterized by the fact that said inlet openings comprise a first set of at least two inlet openings (10,11;10a,11a;10c,11c;33-35;44-46) for hot water and a second set of at least two inlet openings (12,13,12a,13a;12c,13c;37-39;48,49) for cold water; where at least two of said inlet openings of said first and second sets are located approximately along a circumference of said partial spherical seat (6;6a;6c;32;43) and where the inlet of the spherical valve element (14;14a;14b;14c) is formed by an elongated aperture (17;17a;17b;17c;17d;17e) which is fully alignable with at least two of said inlet openings (10-13; 10a-13a;10c-13c;33-35;37-39;44-46;48,49) simultaneously.

2. A mixing faucet as defined in claim 1 further characterized by :
the inlet openings (10-13; 10a-13a; 10c-13c; 33-35; 37-39; 44-46; 48,49) being approximately along a great circle of the partial spherical seat (6; 6a; 6c; 32; 43) of the faucet body, the differences in level of said openings not greater than one-half of the internal diameter of the tubular seals (8; 8a; 8c) which are located in said openings.

3. A mixing valve as defined in claim 1 further characterized by :
the first set (10, 11; 33-35; 44-46) and second set (12, 13; 37-39; 48, 49) of inlet openings are circumferentially spaced approximately along a great circle in the partial spherical seat (6; 32; 43) of the faucet around an angle of approximately 360°.

4. A mixing valve as defined in claim 1 further characterized by :
the first set (10a, 11a) and second (12a, 13a) set of inlet openings being circumferentially spaced about a great circle in the partial spherical seat (6a) for approximately 180°.

5. A mixing valve as defined in claim 1 further characterized by :
the first set (10c, 11c) and second set (12c, 13c) of inlet openings being circumferentially spaced about the partial spherical seat (6c) at an angle between 180° and 360°.

6. A mixing valve as defined in claim 1 further characterized by :
the aperture in the spherical valve element (14b) being a continuous slot (17b).

7. A mixing valve as defined in claim 1 further characterized by :
the aperture (17) in the spherical valve element (14) being subdivided by ribs (58) into small apertures (57).

8. A mixing valve as defined in claim 1 further characterized by :
the aperture (17) in the spherical valve element (14) being elongated for at least the inner diameter of said tubular seal (8) plus double the distance between two adjacent inlet openings (10-13).

9. A mixing valve as defined in claim 1 further characterized by :
the aperture (17) in the spherical valve element (14) being elongated twice the internal opening of the tubular seal (8) inserted in the inlet openings (10-13) in the body plus three times the distance between the adjacent inlet openings (10-13) to at least partially uncover at least three inlet openings simultaneously.

10. A mixing valve as defined in claim 1 further characterized by the fact that :
said outlet (16) of the spherical valve element (14) and the discharge opening (7) are constructed in a way that in certain positions of the spherical valve element the outlet (16) is partially obstructed to control the flow and act as a preclosure device.

11. A mixing valve as defined in claim 1 further characterized by :
an auxiliary insert (5; 5c) being positioned in the faucet body and forming on its inner side said partial spherical seat, said first set (10, 11; 10c, 11c) and second set (12, 13; 12c, 13c) of inlet openings are located in said auxiliary insert.

12. A mixing valve as defined in claim 11 further characterized by :
the insert (5; 5c) having characteristics of a cartridge securing said spherical valve element (14; 14c) therein.

13. A mixing valve as defined in claim 12 further characterized by :
the cartridge (5c) having a central inlet (27c) and a concentric other inlet (26c) which is positioned in a way that the central inlet (27c) receives one of the hot or cold water whereas the concentric inlet (26c) receives the other of the hot or cold water.

14. A mixing valve as defined in claim 1 further characterized by :
the partial spherical seat (43) of the faucet having three inlet openings (44, 45, 46) for hot water and two inlet openings (48, 49) for cold water.

15. A mixing valve as defined in claim 1 further characterized by :
the partial spherical seat (32) having three inlet openings (33, 34, 35) for the hot water and three inlet openings (37, 38, 39) for the cold water.

## Patentansprüche

1. Mischhahn mit
- einem Hahnkörper (1; 1a; 1b; 1c);
- Eintrittsöffnungen (10-13; 10a-13a; 10c-13c; 33-35; 37-39; 44-46; 48, 49) für den Einlauf von Heiss- und Kaltwasser, wobei diese Eintrittsöffnungen (10-13; 10a-13a; 10c-13c; 33-35; 37-39; 44-46; 48, 49) mit rohrförmigen Dichtungen (8; 8a; 8c) ausgerüstet sind;
- einer Austrittsöffnung (7; 4a; 7c) für den Abfluss von Mischwasser;
- einer partiellen kugelförmigen Aufsitzfläche (6; 6a; 6c; 32; 43);
- einem kugelförmigen Ventilelement (14; 14a; 14b; 14c) mit einem Führungsmechanismus (15; 15a; 15b; 15c), der eine Bewegung des Ventilelements (14; 14a; 14b; 14c) in zwei verschiedenen Richtungen zulässt, wobei das benannte Ventilelement (14; 14a; 14b; 14c) mit einem Einlass (17; 17a; 17b; 17c), der mit den benannten Eintrittsöffnungen (10-13; 10a-13a; 10c-13c; 33-35; 37-39; 44-46; 48, 49) zusammenwirkt, sowie mit einem Auslass (16; 16a; 16b; 16c), der mit der benannten Austrittsöffnung (7; 4a; 7c) zusammenwirkt, so dass das Mischverhältnis zwischen Heiss- und Kaltwasser und der Mischwassergesamtstrom geregelt werden können, versehen ist;
wobei die benannten Eintrittsöffnungen (10-13; 10a-13a; 10c-13c) und die benannte Austrittsöffnung (7; 4a; 7c) alle in der partiellen kugelförmigen Aufsitzfläche (6; 6a; 6c; 32; 43) angeordnet sind und der Hahn dadurch gekennzeichnet ist, dass die benannten Eintrittsöffnungen einen ersten Satz von zumindest zwei Eintrittsöffnungen (10, 11; 10a, 11a; 10c, 11c; 33-35; 44-46) für Heisswasser und einen zweiten Satz von zumindest zwei Eintrittsöffnungen (12, 13; 12a, 13a; 12c, 13c; 37-39; 48, 49) für Kaltwasser umfassen; wo zumindest zwei der benannten Eintrittsöffnungen des benannten ersten und zweiten Satzes angenähert entlang einem Umfang der benannten partiellen kugelförmigen Aufsitzfläche (6; 6a; 6c; 32; 43) angeordnet sind und der Einlass des kugelförmigen Ventilelements (14; 14a; 14b; 14c) von einer gestreckten Öffnung (17; 17a; 17b; 17c; 17d; 17e) gebildet wird, die vollständig mit gleichzeitig zumindest zwei der benannten Eintrittsöffnungen (10-13; 10a-13a; 10c-13c; 33-35; 37-39; 44-46; 48, 49) zur Deckung gebracht werden kann.

2. Mischhahn gemäss Anspruch 1, weiter dadurch gekennzeichnet, dass
die Eintrittsöffnungen (10-13; 10a-13a; 10c-13c; 33-35; 37-39; 44-46; 48, 49) angenähert entlang einem Grosskreis der partiellen kugelförmigen Aufsitzfläche (6; 6a; 6c; 32; 43) des Hahnkörpers angeordnet sind, wobei die Niveauunterschiede der benannten Öffnungen den halben Innendurchmesser der rohrförmigen Dichtungen (8; 8a; 8c), die in den benannten Öffnungen angeordnet sind, nicht übersteigen.

3. Mischhahn gemäss Anspruch 1, weiter dadurch gekennzeichnet, dass
der erste (10, 11; 33-35; 44-46) und zweite (12, 13; 37-39; 48, 49) Satz von Eintrittsöffnungen angenähert entlang einem Grosskreis peripher in der partiellen kugelförmigen Aufsitzfläche (6; 32; 43) des Hahnes über einen Winkel von angenähert 360° verteilt sind.

4. Mischhahn gemäss Anspruch 1, weiter dadurch gekennzeichnet, dass
der erste (10a, 11a) und zweite (12a, 13a) Satz von Eintrittsöffnungen auf einem Grosskreis peripher in der partiellen kugelförmigen Aufsitzfläche (6a) über einen Winkel von angenähert 180 verteilt sind.

5. Mischhahn gemäss Anspruch 1, weiter dadurch gekennzeichnet, dass
der erste (10c, 11c) und zweite (12c, 13c) Satz von Eintrittsöffnungen peripher um die partielle kugelförmige Aufsitzfläche (6c) zwischen Winkeln von 180° und 360° angeordnet ist.

6. Mischhahn gemäss Anspruch 1, weiter dadurch gekennzeichnet, dass
die Öffnung im kugelförmigen Ventilelement (14b) ein durchgehender Schlitz (17b) ist.

7. Mischhahn gemäss Anspruch 1, weiter dadurch gekennzeichnet, dass
die Öffnung (17) im kugelförmigen Ventilelement (14) durch Rippen (58) in kleine Öffnungen (57) unterteilt ist.

8. Mischhahn gemäss Anspruch 1, weiter dadurch gekennzeichnet, dass
die Öffnung (17) im kugelförmigen Ventilelement (14) sich über zumindest den inneren Durchmesser der benannten rohrförmigen Dichtung (8) zuzüglich den doppelten Abstand zwischen zwei benachbarten Eintrittsöffnungen (10-13) erstreckt.

9. Mischhahn gemäss Anspruch 1, weiter dadurch gekennzeichnet, dass
die Öffnung (17) im kugelförmigen Ventilelement (14) sich über den doppelten Innendurchmesser der rohrförmigen Dichtung (8), die in die Eintrittsöffnungen (10-13) im Körper eingesetzt ist, zuzüglich den dreifachen Abstand zwischen benachbarten Eintrittsöffnungen (10-13) erstreckt, um gleichzeitig zumindest drei Eintrittsöffnungen zumindest teilweise freizugeben.

10. Mischhahn gemäss Anspruch 1, weiter dadurch gekennzeichnet, dass
der benannte Auslass (16) des kugelförmigen Ventilelements (14) und die Ausflussöffnung (7) so ausgeführt sind, dass der Auslass (16) in bestimmten Stellungen des kugelförmigen Ventilelements teilweise versperrt ist, sodass er den Durchfluss steuert und als Vorverschluss wirkt.

11. Mischhahn gemäss Anspruch 1, weiter dadurch gekennzeichnet, dass
ein Hilfseinsatz (5; 5c) im Hahnkörper angeordnet ist und auf seiner Innenseite die benannte partielle kugelförmige Aufsitzfläche bildet und dass der benannte erste (10, 11; 10c, 11c) und zweite (12, 13; 12c, 13c) Satz von Eintrittsöffnungen in dem benannten Hilfseinsatz angeordnet ist.

12. Mischhahn gemäss Anspruch 11, weiter dadurch gekennzeichnet, dass
der Einsatz (5; 5c) Eigenschaften einer Sicherungspatrone hat, die das benannte kugelförmige Ventilelement (14; 14c) darin sichert.

13. Mischhahn gemäss Anspruch 12, weiter dadurch gekennzeichnet, dass
die Sicherungspatrone (5c) einen zentralen Einlass (27c) und einen weiteren konzentrischen Einlass (26c) besitzt, wobei der konzentrische Einlass (26c) so angeordnet ist, dass der zentrale Einlass (27c) einen Wasserstrom (das Heiss- oder das Kaltwasser) aufnimmt, während der konzentrische Einlass (26c) den anderen Wasserstrom aufnimmt.

14. Mischhahn gemäss Anspruch 1, weiter dadurch gekennzeichnet, dass
die partielle kugelförmige Aufsitzfläche (43) des Hahnes drei Eintrittsöffnungen (44, 45, 46) für Heisswasser und zwei Eintrittsöffnungen (48,49) für Kaltwasser besitzt.

15. Mischhahn gemäss Anspruch 1, weiter dadurch gekennzeichnet, dass
die partielle kugelförmige Aufsitzfläche (32) drei Eintrittsöffnaungen (33, 34, 35) für das Heisswasser und drei Eintrittsöffnungen (37, 38, 39) für das Kaltwasser besitzt.

## Revendications

1. Robinet mélangeur ayant :
- un corps de robinet (1; 1a; 1b; 1c);
- des ouvertures d'entrée (10-13; 10a-13a; 10c-13c; 33-35; 37-39; 44-46; 48, 49) pour l'entrée de l'eau chaude et de l'eau froide, lesquelles ouvertures d'entrée (10-13; 10a-13a; 10c-13c; 33-35; 37-39; 44-46; 48, 49) sont équipées de joints tubulaires (8; 8a; 8c);
- une ouverture d'évacuation (7; 4a; 7c) pour l'évacuation de l'eau mélangée;
- un siège partiellement sphérique (6; 6a; 6c; 32; 43);
- un élément de valve sphérique (14; 14a; 14b; 14c) équipé d'un élément de guidage (15; 15a; 15b; 15c) qui permet le mouvement de l'élément de valve (14; 14a; 14b; 14c) dans deux directions différentes, ledit élément de valve (14; 14a; 14b; 14c) étant pourvu d'une entrée (17; 17a; 17b; 17c) coopérant avec lesdites ouvertures d'entrée (10-13; 10a-13a; 10c-13c; 33-35; 37-39; 44-46; 48, 49) et avec une sortie (16; 16a; 16b; 16c) coopérant avec ladite ouverture d'évacuation (7; 4a; 7c) pour ajuster le mélange entre l'eau chaude et de l'eau froide, ainsi que le débit total de l'eau mélangée;
où lesdites ouvertures d'entrée (10-13; 10a-13a; 10c-13c) et ladite ouverture d'évacuation (7; 4a; 7c) sont toutes situées dans le siège partiellement sphérique (6; 6a; 6c; 32; 43), le robinet étant caractérisé en ce que lesdites ouvertures d'entrée comportent une première série d'au moins deux ouvertures d'entrée (10, 11; 10a, 11a; 10c, 11c; 33-35; 44-46) pour l'eau chaude et un second jeu d'au moins deux ouvertures d'entrée (12, 13, 12a, 13a; 12c, 13c; 37-39; 48-49) pour l'eau froide; où au moins deux desdites ouvertures d'entrée desdits premier et second jeux se trouvent approximativement le long de la circonférence dudit siège partiellement sphérique (6; 6a; 6c; 32; 43) et où l'entrée de l'élément de valve sphérique (14; 14a; 14b; 14c) est formée avec une ouverture allongée (17; 17a; 17b; 17c; 17d; 17e) qui peut être complètement alignée avec au moins deux desdites ouvertures d'entrée (10-13; 10a-13a; 10c-13c; 33-35; 37-39; 44-46; 48, 49).

2. Robinet mélangeur comme défini dans la revendication 1, caractérisé en outre en ce que :
les ouvertures d'entrée (10-13; 10a-13a; 10c-13c; 33-35; 37-39; 44-46: 48, 49) étant disposées approximativement le long d'un grand cercle du siège partiellement sphérique (6; 6a; 6c; 32; 43) du corps du robinet, la différence de niveau desdites ouvertures ne dépassant pas la moitié du diamètre interne des joints tubulaires (8; 8a; 8c) qui sont positionnés dans lesdites ouvertures.

3. Robinet mélangeur comme défini dans la revendication 1, caractérisé en outre en ce que :
le premier jeu (10, 11; 33-35; 44-46) et le second jeu (12, 13; 37-39; 48, 49) des ouvertures d'entrée sont espacés d'une manière circonférentielle approximativement suivant un grand cercle dans le siège partiellement sphérique (6; 32; 43) du robinet, sur un angle d'environ 360°.

4. Robinet mélangeur comme défini dans la revendication 1, caractérisé en outre en ce que :
le premier jeu (10a, 11a) et le second jeu (12a, 13a) d'ouvertures d'entrée sont espacés d'une manière circonférentielle suivant un grand cercle dans le siège partiellement sphérique (6a) sur environ 180°.

5. Robinet mélangeur comme défini dans la revendication 1, caractérisé en outre en ce que :
le premier jeu (10c, 11c) et le second jeu (12c, 13c) d'ouvertures d'entrée sont espacés d'une manière circonférentielle autour du siège partiellement sphérique (6c) sur un angle entre 180° et 360°.

6. Robinet mélangeur comme défini dans la revendication 1, caractérisé en outre en ce que :
l'ouverture dans l'élément de valve sphérique (14b) est une fente continue (17b).

7. Robinet mélangeur comme défini dans la revendication 1, caractérisé en outre en ce que :
l'ouverture (17) dans l'élément de valve sphérique (14) est subdivisée par des nervures (58) en petites ouvertures (57).

8. Robinet mélangeur selon la revendication 1, caractérisé en outre en ce que :
l'ouverture (17) dans l'élément de valve sphérique (14) représente en longueur au moins le diamètre interne dudit joint tubulaire (8), plus deux fois la distance entre deux ouvertures d'entrée adjacentes (10-13).

9. Robinet mélangeur comme défini dans la revendication 1, caractérisé en outre en ce que :
l'ouverture (17) dans l'élément de valve sphérique (14) représente en longueur deux fois l'ouverture interne du joint tubulaire (8) inséré dans les ouvertures d'entrée (10-13) du corps, plus trois fois la distance entre les ouvertures d'entrée adjacentes (10-13), pour découvrir au moins partiellement au moins trois ouvertures d'entrée à la fois.

10. Robinet mélangeur comme défini dans la revendication 1, caractérisé en outre en ce que :
ladite ouverture (16) de l'élément de valve sphérique (14) et l'ouverture d'évacuation (7) sont réalisées de manière à ce que dans certaines positions de l'élément de valve sphérique, la sortie (16) soit partiellement fermée pour ajuster l'écoulement et agir comme dispositif de préfermeture.

11. Robinet mélangeur comme défini dans la revendication 1, caractérisé en outre en ce que :
une pièce d'insertion auxiliaire (5; 5c) est positionnée dans le corps du robinet mélangeur et qu'elle comporte sur son côté interne ledit siège partiellement sphérique, lesdits premier jeu (10, 11; 10c, 11c) et second jeu (12, 13; 12c, 13c) des ouvertures d'entrée sont agencés dans ladite pièce d'insertion auxiliaire.

12. Robinet mélangeur comme défini dans la revendication 1, caractérisé en outre en ce que :
la pièce d'insertion (5; 5c) a les caractéristiques d'une cartouche retenant à l'intérieur ledit élément de valve sphérique (14; 14c).

13. Robinet mélangeur comme défini dans la revendication 12, caractérisé en outre en ce que :
la cartouche (5c) a une entrée centrale (27c) et une autre entrée concentrique (26c) qui est disposée de telle manière que l'entrée centrale (27c) reçoive de l'eau chaude alors que l'entrée concentrique (26b) reçoit de l'eau froide, et inversement.

14. Robinet mélangeur comme défini dans la revendication 1, caractérisé en outre en ce que :
le siège partiellement sphérique (43) du robinet a trois ouvertures d'entrée (44, 45, 46) pour l'eau chaude et deux ouvertures d'entrée (48, 49) pour l'eau froide.

15. Robinet mélangeur comme défini dans la revendication 1, caractérisé en outre en ce que :
le siège partiellement sphérique (32) a trois ouvertures d'entrée (33, 34, 35) pour l'eau chaude et trois ouvertures d'entrée (37, 38, 39) pour l'eau froide.
